# EUROPÄISCHE PATENTANMELDUNG

(11) **EP 3 181 276 A1**
(43) Veröffentlichungstag der Anmeldung: **21.06.2017**
(21) Anmeldenummer: 15201362.9
(22) Anmeldetag: 18.12.2015
(51) Int. Cl.: B23B 39/18, B23B 41/12, B23Q 39/02

(54) **WERKEZUGMASCHINE UND VERFAHREN ZUR FEINBEARBEITUNG**

(71) Anmelder: Anger Machining GmbH, 4050 Traun (AT)
(72) Erfinder: Bürgstein, Heinz, 4240 Waldburg (AT)
(74) Vertreter: Jell, Friedrich

(57) **Zusammenfassung**

Es wird eine Werkzeugmaschine (1) und ein Verfahren zur Feinbearbeitung von Lagerbohrungen (6) einer Lagergasse (5) an mindestens einem Werkstück (4) gezeigt, bei dem ein von einem Werkstückhalter (2) gehaltenes Werkstück (4) und mindestens ein spanendes Werkzeug (7) relativ zueinander positioniert werden und dabei das Werkzeug (7) in das Werkstück (4) einfährt, und in einem weiteren Schritt simultan mehrere Lagerbohrungen (6) durch eine Relativbewegung zwischen mindestens diesem Werkzeug (7) und dem Werkstück (4) in Längsrichtung (9) der Lagergasse (5) feinbearbeitet werden. Um reproduzierbar eine hohe Feinbearbeitungsqualität samt kurzer Taktzeiten zu erreichen, wird vorgeschlagen, dass beim Positionieren mehrere in ihrer Lage zueinander und im Winkel fixierte Winkelköpfe (10) mit je einem spanenden Werkzeug (7) in das Werkstück (4) geneigt zur Längsrichtung (9) der Lagergasse (5) einfahren, welche Werkzeuge (7) in fliegender Lagerung in einem weiteren Schritt simultan mehrere Lagerbohrungen (6) durch die Relativbewegung zwischen ihnen und dem Werkstück (4) in Längsrichtung (9) der Lagergasse (5) feinbearbeiten.

## Beschreibung

Die Erfindung betrifft eine Werkezugmaschine und ein Verfahren zur Feinbearbeitung von Lagerbohrungen einer Lagergasse an mindestens einem Werkstück, bei dem ein von einem Werkstückhalter gehaltenes Werkstück und mindestens ein spanendes Werkzeug relativ zueinander positioniert werden und dabei das Werkzeug in das Werkstück einfährt, und in einem weiteren Schritt simultan mehrere Lagerbohrungen durch eine Relativbewegung zwischen mindestens diesem Werkzeug und dem Werkstück in Längsrichtung der Lagergasse feinbearbeitet werden.

Um Lagerbohrungen einer Lagergasse einer Nockenwelle/Kurbelwelle an einem Zylinderkopf/Motorblock feinbearbeiten zu können, ist es aus dem Stand der Technik bekannt (EP0968069B2), den Zylinderkopf/Motorblock bzw. das Werkstück, welches an einem beweglichen Werkstückhalter eines Transferzentrums aufgespannt ist, gegenüber dem Werkzeug zu positionieren, das als Bohrstange mit mehreren Schneiden ausgeführt ist. Bei dieser Positionierung wird das Werkzeug in die Lagergasse, und zwar in Längsrichtung der Lagergasse, eingefahren, ohne dass dabei die Schneiden der Bohrstange in Eingriff mit dem Werkstück kommen. Nach einer Abstützung der Bohrstange an einem Gegenhalter werden die Lagerbohrungen simultan bzw. gleichzeitig von je einer Schneide der Bohrstange feinbearbeitet. Hierfür wird die Bohrstange bzw. das Werkzeug in Längsrichtung der Lagergasse bewegt. Zwar kann mit Hilfe der Abstützung der Bohrstange die Lagegenauigkeit der feinbearbeiteten Lagerbohrungen bzw. der Maßhaltigkeit der Lagergasse erhöhen werden, nachteilig bedarf es für ein Vorsehen der Abstützung einer - durch das Positionieren der Bohrstange in der Lagergasse bedingte - hohen Nebenzeit im Verfahren. Solche Verfahren stehen daher einer kurzen Taktzeit am Transferzentrum entgegen.

Zudem besteht beim Positionieren der Bohrstange in der Lagergasse eine erhöhte Gefahr der Werkstückberührung - was das Ergebnis der Feinbearbeitung hinsichtlich der Oberflächengüte negativ beeinflusst. Die Reproduzierbarkeit des Verfahrens wird dadurch beeinträchtigt.

Die Erfindung hat sich daher die Aufgabe gestellt, ein Verfahren zur Feinbearbeitung von Lagerbohrungen einer Lagergasse zu schaffen, mit dem einerseits reproduzierbar eine hohe Feinbearbeitungsqualität erreicht werden kann und zusätzlich auch eine kurze Taktzeit der Werkzeugmaschine ermöglicht.

Die Erfindung löst die gestellte Aufgabe dadurch, dass beim Positionieren mehrere in ihrer Lage zueinander und im Winkel fixierte Winkelköpfe mit je einem spanenden Werkzeug in das Werkstück geneigt zur Längsrichtung der Lagergasse einfahren, welche Werkzeuge in fliegender Lagerung in einem weiteren Schritt simultan mehrere Lagerbohrungen durch die Relativbewegung zwischen ihnen und dem Werkstück in Längsrichtung der Lagergasse feinbearbeiten

Fahren beim Positionieren mehrere in ihrer Lage zueinander und im Winkel fixierte Winkelköpfe mit je einem spanenden Werkzeug in das Werkstück geneigt zur Längsrichtung der Lagergasse ein, kann dies die Nebenzeit im Verfahren erheblich verkürzen - weil beispielsweise auf ein aus dem Stand der Technik bekanntes, zeitaufwändiges Einfahren eines Bohrwerkzeugs in Längsrichtung der Lagergasse verzichtet werden kann. Zudem kann durch dieses erfindungsgemäße Positionieren auch die aus dem Stand der Technik bekannte Gefahr eine Werkstückberührung im Bereich der Lagerbohrungen reduziert werden. Mit einer Beeinträchtigung der Genauigkeit einer nachfolgenden Feinbearbeitung muss sohin nicht gerechnet werden - womit es möglich ist, eine hohe Reproduzierbarkeit des Verfahrens sicherzustellen.
Bearbeiten dann Werkzeuge in fliegender Lagerung in einem weiteren Schritt simultan mehrere Lagerbohrungen durch die Relativbewegung zwischen ihnen und dem Werkstück in Längsrichtung der Lagergasse fein, kann das Verfahren im Vergleich zum Stand der Technik frei von einer Nebenzeit, die zur Abstützung des Werkzeugs erforderlich wären, bleiben. Auf diese Weise kann die Taktzeit der Werkzeugmaschine weiter verkürzt werden. Trotz dieser fehlenden Abstützung muss jedoch eine Beeinträchtigung der Genauigkeit der Feinbearbeitung nicht in Kauf genommen werden. Durch die erfindungsgemäße Lagefixierung der Winkelköpfe zueinander ergibt sich nämlich eine vergleichsweise hohe Steifigkeit in der parallelen Werkzeugführung, was einer Radialauslenkung frei auskragender Werkzeuge entgegenwirken kann. Trotz fliegender Feinbearbeitung ist es daher möglich, hohe Lagegenauigkeit der Lagerbohrungen bzw. eine Maßhaltigkeit an der Lagergasse zur Verfügung zu stellen.
Das erfindungsgemäße Verfahren zur Feinbearbeitung von Lagerbohrungen einer Lagergasse kann daher nicht nur reproduzierbar eine hohe Qualität sicherstellen, sondern sich von bekannten Verfahren auch aufgrund seiner kurzen Nebenzeiten abheben - was in weiterer Folge zu einer Werkzeugmaschine, insbesondere zu einem Transferzentrum, mit geringen Taktzeit führen kann.

Treibt eine Antriebspindel alle Abtriebspindeln der Winkelköpfe an, mit denen die Werkzeuge antriebsverbunden sind, kann die parallele Feinbearbeitung der Werkzeuge aufeinander abgestimmt werden und damit die über die Lagerbohrungen gemittelte Bearbeitungsgenauigkeit an der Lagergasse verbessern. Die gemeinsame Antriebspindel kann nämlich die resultierenden Kräfte während der Bearbeitung zentral abtragen und damit Belastungen vermindern.

Diese Qualität der Feinbearbeitung kann sich weiter verbessern, indem sich beim simultanen Feinbearbeiten die Winkelköpfe am selben Träger der Werkzeugmaschine gemeinsam abstützen. Ein derartiger Träger kann nämlich beispielsweise für einen Temperarturausgleich zwischen den Winkelköpfe sorgen, und damit zur erhöhten Genauigkeit in der Fixierung deren Lage zueinander beitragen.

Eine sich beim Eingriff der Werkzeuge am Werkstück eventuell ergebende Stoßbelastung kann vermindert bzw. verhindert werden, wenn für das simultane Feinbearbeiten mehrere Werkzeuge der Winkelköpfe zeitversetzt in Eingriff mit dem Werkstück kommen. Damit kann die Qualität der Feinbearbeitung - beispielsweise hinsichtlich Oberflächengüte, Maßgenauigkeit bzw. zulässige Abweichung vom Sollmaß etc. - durch das erfindungsgemäße Verfahrens weiter erhöht werden.

Werden Werkzeuge der Winkelköpfe mit entgegengesetzten Drehrichtungen rotiert, kann dies zu einem Kräfteausgleich an der gemeinsamen Abstützung der Winkelköpfe an der Werkzeugmaschine führen und damit die Reproduzierbarkeit des Verfahrens weiter erhöhen.

Vorstehender Vorteil kann erhöht - und damit die Qualität der Feinbearbeitung verbessert - werden, wenn Werkzeuge der Winkelköpfe unterschiedlich schnell rotiert werden. Beispielsweise kann damit eine resonante Schwingungsanregung am Werkstück verhindert werden.

Werden die Winkelköpfe vor ihrem Einfahren in das Werkstück in ihrer Lage eingestellt und anschließend zueinander fixiert, kann vor dem Feinbearbeiten vergleichsweise einfach handhabbar auf eventuelle Schwankungen von Parametern, die für das Verfahren wesentlich sind - sei es durch sich verändernde Bedingungen an der Werkzeugmaschine oder am Werkstück - verbessert reagiert werden. Der Stand der Technik mit einer starren Bohrstange kann eine derartige Kompensation nicht erreichen, sodass gegenüber diesem erfindungsgemäß die Qualität in der Feinbearbeitung erheblich erhöhbar ist.

Werden die Winkelköpfe in ihrer Lage eingestellt, eine Abweichung des Ist- vom Sollverlauf der Lagergasse des aufgespannten Werkstücks zu kompensieren, können damit selbst geringfügige Verspannungen des Werkstücks - beispielsweise durch dessen Aufspannung am Werkstückträger - ausgeglichen werden.

Das erfindungsgemäße Verfahren kann sich daher durch seine besonders hohe Genauigkeit auszeichnen.

Positioniert der bewegliche Werkstückhalter das Werkstück gegenüber den spanenden Werkzeugen, kann dies der Reproduzierbarkeit des Verfahrens dahingehend förderlich sein, dass im Bereich der Werkzeuge und deren Aufspannung Toleranzen durch Führungen vermeidbar werden.

Bearbeitet je ein Werkzeug je eine Lagerbohrung fein, können die bei der simultanen Feinbearbeitung entstehenden Kräfte vorteilhaft auf eine Vielzahl von Werkzeugen bzw. Abtriebspindeln bzw. Winkelköpfen aufgeteilt werden, was der Qualität der Feinbearbeitung und damit der Reproduzierbarkeit des Verfahrens förderlich sein kann.

Werden die Werkzeuge währende dem Positionieren rotierend angetrieben, kann die Qualität der Feinbearbeitung weiter erhöht werden. Beispielsweise können schon während der Positionierung rotationsbedingte mechanische Belastungen und die dabei entstehenden Verformungen ausgeglichen werden, die Werkzeuge exakt an die Lagerbohrungen anzustellen.

Außerdem kann sich das erfindungsgemäße Verfahren gegenüber bekannten Verfahren zur Feinbearbeitung von Lagerbohrungen einer Lagergasse dadurch auszeichnen, dass zur Feinbearbeitung in Längsrichtung der Lagergasse auch noch eine Feinbearbeitung quer zur Längsrichtung der Lagergasse an diesen vorgenommen werden kann. Beispielsweise, indem die Lagerbohrungen angefast etc. versehen werden.

Die Erfindung hat sich außerdem die Aufgabe gestellt, eine Werkzeugmaschine zur Feinbearbeitung von Lagerbohrungen einer Lagergasse zu schaffen, die sich durch geringe Nebenzeiten auszeichnen und so kurze Taktzeiten ermöglichen kann.

Die Erfindung löst die gestellte Aufgabe dadurch, dass die Bearbeitungsstation mehrere in ihrer Lage zueinander und im Winkel fixierte Winkelköpfe mit je einem fliegend gelagerten, spanenden Werkzeug aufweist, wobei die auf Lücke zu den Lagerbohrungen angeordneten Winkelköpfe zum, zur in Längsrichtung der Lagergasse geneigten Einfahren in das Werkstück ausgebildet sind.

Weist die Bearbeitungsstation mehrere in ihrer Lage zueinander und im Winkel fixierte Winkelköpfe mit je einem fliegend gelagerten, spanenden Werkzeug auf, wobei die auf Lücke zu den Lagerbohrungen angeordneten Winkelköpfe zum, zur in Längsrichtung der Lagergasse geneigten Einfahren in das Werkstück ausgebildet sind, können die zur Feinbearbeitung vorgesehenen Werkzeuge ohne lange Nebenzeiten schnell und präzise gegenüber den Lagerbohrung der Lagergasse positioniert werden. Erfindungsgemäß kann somit eine Werkzeugmaschine mit kurzen Taktzeiten geschaffen werden.

Die Genauigkeit der Feinbearbeitung kann erhöht werden, wenn die Winkelköpfe an einem gemeinsamen Träger befestigt sind und sich dadurch gegenseitig abstützen. Zudem kann dies dazu beitragen, die Konstruktion der Werkzeugmaschine zu vereinfachen und ihre Wartungsfreundlichkeit zu verbessern. Beispielsweise können bei einem von der Werkzeugmaschine lösbaren Träger alle Winkelköpfe bzw. die gesamte Bearbeitungsstation ausgetauscht werden.

Die Konstruktion der Werkzeugmaschine kann weiter vereinfacht werden, wenn die Winkelköpfe Abtriebspindeln aufweisen, die mit den Werkzeugen antriebsverbunden sind, wobei eine Antriebspindel der Werkzeugmaschine alle Abtriebspindeln der Winkelköpfe antreibt.

Selbst bei räumlich besonders beengten Bedingungen, wie diese bei Lagergassen sehr häufig gegeben sind, kann eine erfindungsgemäße Feinbearbeitung erfolgen, wenn zwischen der Antriebspindel und den Abtriebspindeln ausschließlich Stirnradgetriebe vorgesehen sind.

In den Figuren wird beispielsweise das erfindungsgemäße Verfahren anhand einer Ausführungsvariante näher erläutert. Es zeigen
- Fig. 1: eine schematische Seitenansicht auf eine Werkzeugmaschine mit einem an ihrem Werkstückhalter aufgespannten Werkstück,
- Fig. 2: einen zur Fig. 1 dahingehend veränderte Darstellung, dass das Werkstück zur folgenden Feinbearbeitung positioniert ist und
- Fig. 3: eine Darstellung bei der Feinbearbeitung des Werkstücks und
- Fig. 4: eine vergrößerte Teilansicht auf die Winkelköpfe des nach den Figuren 1 bis 3 dargestellte Werkzeugmaschine in teilweise aufgerissener Darstellung.

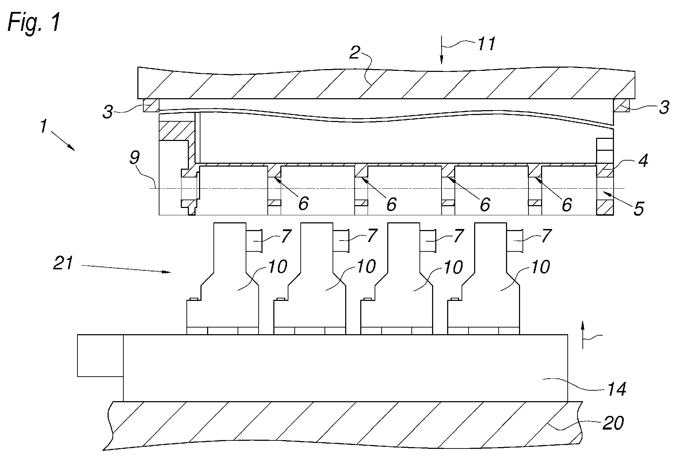

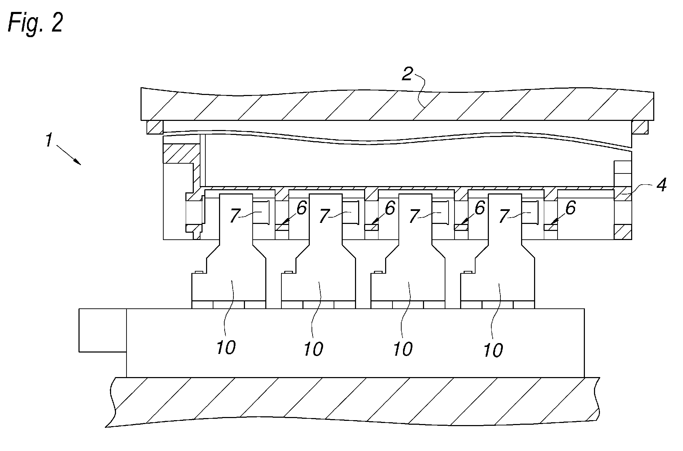

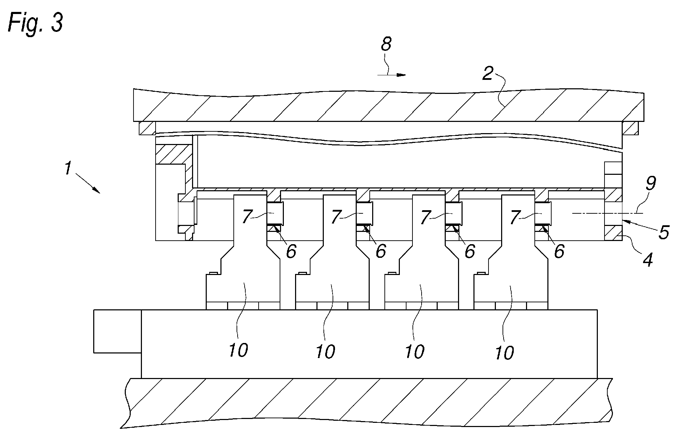

Fig. 1 zeigt teilweise eine, beispielsweise als Transferzentrum ausgebildete, Werkzeugmaschine 1 mit einem mehrachsig beweglichen und eventuell auch drehbaren Werkstückhalter 2, der über eine Halterung 3 ein als Zylinderkopf ausgebildetes Werkstück 4 festhält. Die Halterung 3 kann beispielsweise als Spanneinrichtung ausgebildet sein und damit das Werkstück aufspannen.
Die Lagergasse 5 des aufgerissen dargestellten Zylinderkopfs 4 wird zur Aufnahme einer nicht dargestellten Nockenwelle feinbearbeitet, und zwar an ihren Lagerbohrungen 6. Hierzu wird ein spanendes Werkzeug 7 verwendet, das eine geometrisch bestimmte oder unbestimmte Schneide aufweisen kann.
Die Werkzeugmaschine 1 positioniert in weiterer Folge den Werkstückhalter 2 bzw. damit das Werkstück 4 und das Werkzeug 7, relativ zueinander, wie dies in der Fig. 2 erkannt werden kann. Hierbei wird der Werkstückhalter 2 zum an der Werkzeugmaschine 1 ortsfesten Werkzeug 7 hinbewegt bzw. damit angefahren, welches Werkzeug in das Werkstück 4 berührungsfrei einfährt. Es ist aber auch vorstellbar, was nicht dargestellt ist, dass das Werkzeug 7 zum Werkstück 4 hinbewegt wird bzw. damit angefahren wird.
Anschließend werden simultan die Lagerbohrungen 6 feinbearbeitet - und zwar durch eine Relativbewegung zwischen dem Werkzeug 7 und dem Werkstück 4 - wobei diese Relativbewegung in, also entlang der Längsrichtung 9 der Lagergasse 5 erfolgt. Dazu wird das rotierende Werkzeug 7 in Richtung 8 der Lagerbohrung 6 vorgeschoben, wie dies der Zusammenschau der Figuren 2 und 3 erkennbar ist.

Erfindungsgemäß wird jedoch nicht nur ein einziges Werkzeug 7, beispielsweise eine Bohrstange mit mehreren Schneiden, verwendet - vielmehr werden mehrere spanende Werkzeuge 7 zur simultanen Feinbearbeitung der Lagerbohrungen 6 herangezogen. Hierzu fahren beim Positionieren des Werkstücks 4 - wie in Fig. 2 zu erkennen - mehrere in ihrer Lage zueinander und im Winkel fixierte Winkelköpfe 10 mit je einem spanenden Werkzeug 7 in das Werkstück 4 berührungsfrei ein, und zwar geneigt zur Längsrichtung 9 der Lagergasse 5. Dies wird erreicht, indem der Werkstückhalter 2 im rechten Winkel zur Längsrichtung 9 der Lagergasse 5 zu den Winkelköpfen 10 hin bewegt wird - wie dies anhand der in Fig. 1 eingezeichneten Bewegungsrichtung 11 dargestellt ist. Die Winkelköpfe 10 sind auf Lücke zwischen den Lagerbohrungen 6 positioniert und weisen einen fixierten 90 Grad-Winkel (90° Winkelköpfe) auf. Das erfindungsgemäße Verfahren bzw. in weiterer Folge die Werkzeugmaschine 1 bedürfen also lediglich geringer Nebenzeiten.

Anschließend werden die Werkzeuge 7 in Rotation versetzt und die Lagerbohrungen 6 simultan von je einem Werkzeug 7 feinbearbeitet - und zwar durch die Relativbewegung zwischen den Werkzeugen 7 und dem Werkstück 4 in Längsrichtung 9 der Lagergasse 5, indem die Werkzeuge 7 in Richtung 8 der Lagerbohrung 6 vorgeschoben werden - siehe hierzu Fig. 3. Die Feinbearbeitung der Lagerbohrungen 6 der Lagergasse 5 erfolgt fliegend, da die Werkzeuge 7 keine Abstützung aufweisen. Nebenzeiten und zusätzlicher Konstruktionsaufwand durch eine Abstützung der Werkzeuge 7 können sohin vermieden werden, was zu kurzen Taktzeiten an der Werkzeugmaschine 1 führt. Die fehlende Abstützung der Werkzeuge 7 führt dabei jedoch nicht zu einer Reduktion der Qualität der Feinbearbeitung, weil die Winkelköpfe 10 in ihrer Lage zueinander fixiert sind - womit eine hohe Lagegenauigkeit der Lagerbohrungen 6 bzw. die erforderliche Maßgenauigkeit an der Lagergasse 5 bestehen.

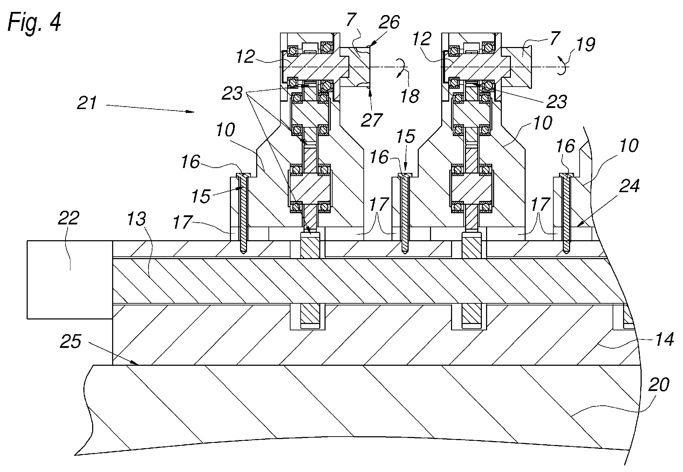

Die Feinbearbeitung der Lagergasse 5 wird in ihrer Qualität weiter verbessert, indem die Werkzeuge 7 einspannende Abtriebspindeln 12 der Winkelköpfe 10 von einer Antriebspindel 13 der Werkzeugmaschine 1 gemeinsam angetrieben werden - was im Detail der Fig. 4 zu entnehmen ist. Die Abtriebspindeln 12 verspannen sich also gegenseitig über die Antriebsspindel 13, was deren Neigung zu Schwingungen reduzieren kann.

Zudem sind die Winkelköpfe 10 am selben Träger 14 der Werkzeugmaschine 1 befestigt. Dadurch wird sichergestellt, dass sich beim simultanen Feinbearbeiten auch die Winkelköpfe 10 über den Träger 14 gemeinsam verspannen, was zu deren präzisen Lagefixierung beiträgt.

Die Befestigung der Winkelköpfe 10 erfolgt über lösbare Befestigungsmittel 15, wovon zu jedem Winkelkopf 10 beispielhaft eine Schraube 16 dargestellt ist. Zwischen den Winkelköpfen 10 und dem Träger 14 sind Abstandshalter 17 vorgesehen, über welche die fixierte Lage der Winkelköpfe 10 an der Werkzeugmaschine 1 eingestellt werden kann. Damit können beispielsweise vor einem Eintauchen der Winkelköpfe 10 in das Werkstück 4 diese in ihrer Lage zueinander eingestellt werden. Im Ausführungsbeispiel nach Fig. 4 durchdringen die Schrauben die starren Abstandshalter. Jegliche andere Ausführung hierzu ist natürlich ebenfalls vorstellbar - beispielsweise, die Abstandshalter 17 als Druckdose etc. auszuführen, um eine gesteuerte/geregelte Einstellung der Lage der Winkelköpfe 10 vornehmen zu können. Über diese Lageeinstellung der Winkelköpfe kann beispielsweise auch eine Abweichung des Ist- vom Sollverlauf der Lagergasse 5 kompensiert werden, die sich durch die Aufspannung des Werkstücks 4 am Werkstückträger 2 ergeben kann. So ist es beispielsweise möglich, dass ein Winkelkopf 10 gegenüber anderen Winkelköpfen 10 tiefer in das Werkzeug 7 eintaucht wird, um eine Durchbiegung des Werkstücks 4 auszugleichen. Dies ist in den Figuren nicht näher dargestellt, jedoch ein wesentlicher erfindungsgemäßer Vorteil gegenüber dem Stand der Technik.

Außerdem kann vorgesehen sein, dass für das simultane Feinbearbeiten mehrere Werkzeuge 7 zeitversetzt in Eingriff mit dem Werkstück 4 kommen - was eine Stoßbelastung beim Anschnitt reduziert und damit die Qualität der Feinbearbeitung der Lagergasse erhöht. Darauf wird in den Figuren 1 bis 4 allerdings nicht weiter eingegangen.

Mehrere Werkzeuge 7 der Winkelköpfe 10 rotieren außerdem mit entgegengesetzten Drehrichtungen 18, 19, um resonante Schwingungen an der Werkzeugmaschine 1 zu dämpfen. Dies wird weiter verbessert, indem mehrere Werkzeuge 7 unterschiedlich schnell rotieren und/oder verschiedene Rotationsgeschwindigkeit aufweisen.

Der Träger 14 ist am, vorzugsweise innen offenen und rahmenförmigen, Gestell 20 der nicht näher dargestellten Werkzeugmaschine 1 vorgesehen. Die in der Lage zueinander fixierten Winkelköpfe 10 bilden eine Bearbeitungsstation 21 an der Werkzeugmaschine 1 aus. Der Werkstückträger 3 transportiert das fein zu bearbeitende Werkstück 4 zu dieser Bearbeitungsstation 21 und positioniert es gegenüber den Werkzeugen 7 der Winkelköpfe 10 der Bearbeitungsstation 21.

Diese Bearbeitungsstation 21 weist zudem einen Antrieb 22 auf, der über eine Antriebspindel 13 im Träger 14 mit den Abtriebspindeln 12 ausschließlich über schrägverzahnte Stirnradgetriebe 23 gekoppelt ist.

Zudem ist in den Figuren zu erkennen, dass alle Winkelköpfe 10 des Ausführungsbeispiels eine feste 90 Grad Ausführung (90° Winkelköpfe) aufweisen. Andere feste Winkeleinstellungen/Ausführungen von Winkelköpfen sind natürlich ebenfalls vorstellbar. Des Weiteren ist die Abtriebspindel 12 der Winkelköpfe 10 zurückversetzt ausgeführt und ragen damit der Aufspannplatte 23 der Winkelköpfe 10 nicht vor.

Zwischen dem Träger 14 und dem Gestell 20 befindet sich eine lösbare Verbindung 24, sodass der Träger mitsamt seinen an ihm befestigten Winkelköpfen 10 beispielsweise für Wartungszwecke von der Werkzeugmaschine 1 gelöst werden kann. Für eine besonders einfache Handhabung ist der Träger 14 auch plattenförmig ausgebildet.

Die auf einer Seite des Trägers 14 vorgesehenen Winkelköpfe 10 kragen dem Träger 14 vor. Die Winkelköpfe 10 sind nebeneinander auf Abstand am Träger 14 angeordnet. Die Winkelköpfe 10 weisen vom Träger 14 ausgehend eine sich in Richtung des Abtriebspindel 12 verjüngende Form auf.

Im Allgemeinen wird erwähnt, dass die Werkzeuge 7 mindestens eine geometrisch bestimmte Schneide 25, 26 aufweisen, um damit die Lagerbohrungen fein zu bearbeiten. Vorzugsweise weisen die Werkzeuge 7 zwei um 180 Grad versetzte geometrisch bestimmte Schneiden 25, 26 auf, wie dies nach Fig. 4 besser erkannt werden kann. Bei mehreren Schneiden 25, 26 am Werkzeug 7 sind dies Schneiden 25, 26 relativ zueinander fixiert, wodurch die Genauigkeit der Feinbearbeitung weiter erhöht werden kann. Die Schneiden 25, 26 werden beispielsweise von Wendeschneidplatten ausgebildet.

Vor und/oder nach dieser Feinbearbeitung kann das Werkstück 4 einer anderen Bearbeitungsstation zugeführt werden, was nicht weiter dargestellt ist. Dies ist insbesondere bei einer Transfermaschine der Fall, bei der mit Hilfe eines mehrachsig bewegbaren und eventuell auch drehbaren Werkstückhalters mehrere Bearbeitungsstationen angefahren werden und den Nebenzeiten bzw. damit der Taktzeit ein vergleichsweise hoher Stellenwert zukommt.

## Patentansprüche

1. Verfahren zur Feinbearbeitung von Lagerbohrungen (6) einer Lagergasse (5) an mindestens einem Werkstück (4), bei dem ein von einem Werkstückhalter (2) gehaltenes Werkstück (4) und mindestens ein spanendes Werkzeug (7) relativ zueinander positioniert werden und dabei das Werkzeug (7) in das Werkstück (4) einfährt, und in einem weiteren Schritt simultan mehrere Lagerbohrungen (6) durch eine Relativbewegung zwischen mindestens diesem Werkzeug (7) und dem Werkstück (4) in Längsrichtung (9) der Lagergasse (5) feinbearbeitet werden, **dadurch gekennzeichnet, dass** beim Positionieren mehrere in ihrer Lage zueinander und im Winkel fixierte Winkelköpfe (10) mit je einem spanenden Werkzeug (7) in das Werkstück (4) geneigt zur Längsrichtung (9) der Lagergasse (5) einfahren, welche Werkzeuge (7) in fliegender Lagerung in einem weiteren Schritt simultan mehrere Lagerbohrungen (6) durch die Relativbewegung zwischen ihnen und dem Werkstück (4) in Längsrichtung (9) der Lagergasse (5) feinbearbeiten.

2. Verfahren nach Anspruch 1, **dadurch gekennzeichnet, dass** eine Antriebspindel (13) alle Abtriebspindeln (12) der Winkelköpfe (10) antreibt, mit denen die Werkzeuge (7) antriebsverbunden sind.

3. Verfahren nach Anspruch 1 oder 2, **dadurch gekennzeichnet, dass** sich beim simultanen Feinbearbeiten die Winkelköpfe (10) am selben Träger (14) gemeinsam abstützen.

4. Verfahren nach Anspruch 1, 2 oder 3, **dadurch gekennzeichnet, dass** für das simultane Feinbearbeiten mehrere Werkzeuge (7) der Winkelköpfe (10) zeitversetzt in Eingriff mit dem Werkstück (4) kommen.

5. Verfahren nach einem der Ansprüche 1 bis 4, **dadurch gekennzeichnet, dass** Werkzeuge (7) der Winkelköpfe (10) mit entgegengesetzten Drehrichtungen rotiert werden.

6. Verfahren nach einem der Ansprüche 1 bis 5, **dadurch gekennzeichnet, dass** Werkzeuge (7) der Winkelköpfe (10) unterschiedlich schnell rotiert werden.

7. Verfahren nach einem der Ansprüche 1 bis 6, **dadurch gekennzeichnet, dass** die Winkelköpfe (10) vor ihrem Einfahren in das Werkstück (4) in ihrer Lage eingestellt und anschließend zueinander fixiert werden.

8. Verfahren nach Anspruch 7, **dadurch gekennzeichnet, dass** die Winkelköpfe (10) in ihrer Lage eingestellt werden, eine Abweichung des Ist- vom Sollverlauf der Lagergasse (5) des aufgespannten Werkstücks (4) zu kompensieren.

9. Verfahren nach einem der Ansprüche 1 bis 8, **dadurch gekennzeichnet, dass** der bewegliche Werkstückhalter (2) das Werkstück (4) gegenüber den spanenden Werkzeugen (7) positioniert.

10. Verfahren nach einem der Ansprüche 1 bis 9, **dadurch gekennzeichnet, dass** je ein Werkzeug (7) je eine Lagerbohrung (6) feinbearbeitet.

11. Verfahren nach einem der Ansprüche 1 bis 10, **dadurch gekennzeichnet, dass** die Werkzeuge (7) währende dem Positionieren rotierend angetrieben werden.

12. Werkzeugmaschine zur Durchführung des Verfahrens nach einem der Ansprüche 1 bis 11, mit einem Werkstückhalter (2), der eine Halterung (3) für mindestens ein Werkstück (4) aufweist, und mit mindestens einer zur simultanen Feinbearbeitung der Lagerbohrungen (6) einer Lagergasse (5) vorgesehenen Bearbeitungsstation (21), die mindestens ein spanendes Werkzeug (7) aufweist, **dadurch gekennzeichnet, dass** die Bearbeitungsstation (21) mehrere in ihrer Lage zueinander und im Winkel fixierte Winkelköpfe (10) mit je einem fliegend gelagerten, spanenden Werkzeug (7) aufweist, wobei die auf Lücke zu den Lagerbohrungen (6) angeordneten Winkelköpfe (10) zum, zur in Längsrichtung (9) der Lagergasse (5) geneigten Einfahren in das Werkstück (4) ausgebildet sind.

13. Werkzeugmaschine nach Anspruch 12, **dadurch gekennzeichnet, dass** die Winkelköpfe (10) an einem gemeinsamen Träger (14) befestigt sind.

14. Werkzeugmaschine nach Anspruch 12 oder 13, **dadurch gekennzeichnet, dass** die Winkelköpfe (10) Abtriebspindeln (12) aufweisen, die mit den Werkzeugen (7) antriebsverbunden sind, wobei eine Antriebspindel (13) der Werkzeugmaschine (1) alle Abtriebspindeln (12) der Winkelköpfe (10) antreibt.

15. Werkzeugmaschine nach Anspruch 12, 13 oder 14, **dadurch gekennzeichnet, dass** zwischen der Antriebspindel (13) und den Abtriebspindeln (12) ausschließlich Stirnradgetriebe (23) vorgesehen sind.
